# EUROPEAN PATENT APPLICATION

(11) **EP 2 367 146 A1**
(43) Date of publication of application: **21.09.2011**
(21) Application number: 10156815.2
(22) Date of filing: 17.03.2010
(51) Int. Cl.: G06Q 10/00

(54) **System and method for controlling event reminders**

(71) Applicant: RESEARCH IN MOTION LIMITED, Waterloo, Ontario N2L 3W8 (CA)
(72) Inventor: Fyke, Steven, Henry, Waterloo Ontario N2L 3W8 (CA); Legg, Daniel, James, Waterloo Ontario N2L 3W8 (CA); Walker, David, Ryan, Waterloo Ontario N2L 3W8 (CA); Dean, Edward, Michael, Waterloo Ontario N2L 5Z5 (CA); Owen, Russell, N., Waterloo Ontario N2K 4B8 (CA); Pasquero, Jerome, Waterloo Ontario N2L 3W8 (CA); Rose, Scott, Douglas, Waterloo Ontario N2L 3W8 (CA); Brown, Michael, Stephen, Waterloo Ontario N2L 5Z5 (CA); Godfrey, James, Andrew, Waterloo Ontario N2L 5Z5 (CA)
(74) Representative: MERH-IP Matias Erny Reichl Hoffmann

(57) **Abstract**

A system and method are provided for obtaining data that could affect event details, such that this data can be used to generate alerts that are sent early enough to give the user time to reach the event, predict lateness, arrange replacements/delegates, reschedule, cancel meetings in advance, etc. By more intelligently providing reminders to the user, the above-described unforeseen circumstances can be dealt with. In some embodiments, an aggregation of various external data sources as well as internal data can be used to better predict when a user should be reminded of the time for their event, determine and advise whether they may be late regardless, and/or enable the user to arrange a delegate or replacement or to reschedule or cancel the event.

## Description

### TECHNICAL FIELD

The following relates to systems and methods for controlling event reminders.

### BACKGROUND

Computing devices, both mobile and desktop, typically provide applications for organizing events such as meetings or other obligations. For example, a calendar application may be provided to enable a user to organize daily events, including those that require other attendees. When creating a new calendar event, the user is typically able to select or otherwise designate a reminder time. The reminder time generally specifies either a particular time at which the user will be reminded of the event, or an interval of time before the event at which the reminder will occur (e.g. 15 minutes prior).

### GENERAL

There may be provided a method, computer readable medium and computing device for controlling event reminders in a computing device, wherein the method comprises enabling an event entry to be stored in the computing device, the event entry having a start time associated therewith; receiving a designation for the event entry indicative of a reminder time for the event, wherein computing device is configured to display a reminder on a display of the computing device at a predetermined time prior to the start time for the event; obtaining data associated with the event and indicating that an earlier reminder time is required; using the data associated with the event to generate a new reminder time which is earlier than the reminder time designated for the event; and displaying a message on the display associated with the new reminder time.

### BRIEF DESCRIPTION OF THE DRAWINGS

Embodiments will now be described by way of example only with reference to the appended drawings wherein:

FIG. 1 is a schematic diagram illustrating a system in which data items are pushed from a host system to a mobile device.

FIG. 2 is a block diagram of an example embodiment of a mobile device.

FIG. 3 is a block diagram illustrating example ones of the other software components shown in FIG. 2.

FIG. 4 is a block diagram illustrating further detail of the intelligent reminder module shown in FIG. 3.

FIG. 5 is an example graphical user interface (GUI) for an event entry screen.

FIG. 6 is another example GUI for an event entry screen.

FIG. 7 is an example screen shot of a mobile device display showing an event reminder message.

FIG. 8 is an example screen shot of a mobile device display showing a lateness notification.

FIG. 9 is an example screen shot of a mobile device display showing a pre-populated email message.

FIG. 10 is an example screen shot of a mobile device display showing an alternate request.

FIG. 11 is an example screen shot of a mobile device display showing an alternate confirmation message.

FIG. 12 is an example screen shot of a mobile device display showing an alternate denial message.

FIG. 13 is an example screen shot of a mobile device display showing an event reschedule request.

FIG. 14 is an example screen shot of a mobile device display showing an event reschedule confirmation message.

FIG. 15 is an example screen shot of a mobile device display showing an event delegate confirmation message.

FIG. 16 is an example screen shot of a mobile device display showing an absence notification message.

FIG. 17 is a flow chart illustrating example computer executable instructions for intelligently adjusting an event reminder alert.

FIG. 18 is a flow chart illustrating example computer executable instructions for intelligently performing a lateness remediation process.

FIG. 19 is a flow chart illustrating example computer executable instructions for intelligently performing another lateness remediation process.

FIG. 20 is a flow chart illustrating example computer executable instructions for intelligently performing yet another lateness remediation process.

FIG. 21 is a flow chart illustrating example computer executable instructions for intelligently performing yet another lateness remediation process.

### DETAILED DESCRIPTION OF THE DRAWINGS

It has been recognized that although the purpose of creating an event, e.g. in a calendar application, is to allow one to organize their time, unforeseen circumstances may arise which can affect the details of the event. In order to accommodate these unforeseen circumstances, user interaction is typically required, e.g. to change the meeting time, adjust the reminder time, contact others involved in the event, etc. Moreover, if the time to get to the event is greater than the time which is available to the user to get there, either currently or after the designated reminder time, the user may be late or miss the event.

It has been found that by obtaining data that could affect event details, such data can be used to generate alerts that are sent early enough to give the user time to reach the event, predict lateness, arrange replacements/delegates, reschedule, cancel meetings in advance, etc. By more intelligently providing reminders to the user, the above-described unforeseen circumstances can be dealt with. In some embodiments, as will be explained below, an aggregation of various external data sources as well as internal data can be used to better predict when a user should be reminded of the time for their event (e.g. to give them enough time to arrive), determine and advise whether they may be late regardless, and/or enable the user to arrange a delegate or replacement or to reschedule or cancel the event. For example, external data such as traffic data, weather data, flight information, customs and security wait times, parking information; and/or internal data such as GPS location can be used to determine possible delays in getting to the event and thus require advance notice or rescheduling.

The following examples include communications between mobile or handheld devices, which will be commonly referred to as mobile devices hereinafter and referred to by numeral 10. As will be discussed, the principles discussed below are equally applicable to other computing devices, such as desktop computers and the like.

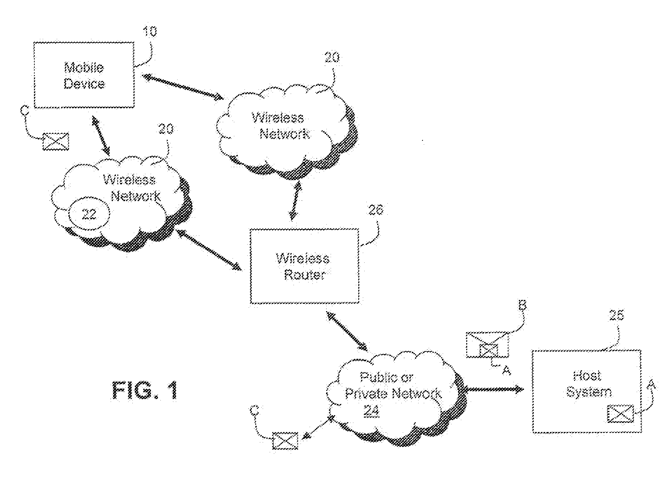

The mobile device 10 can be a multi-way communication device with advanced data communication capabilities including the capability to communicate with other mobile devices 10 or computer systems through a network of transceiver stations. The mobile device 10 may also have the capability to allow voice communication. Depending on the functionality provided by the mobile device 10, it may be referred to as a data messaging device, a multi-way pager, a cellular telephone with data messaging capabilities, a wireless Internet appliance, or a data communication device (with or without telephony capabilities). The mobile device 10 can also be one that is used in a system that is configured for continuously routing all forms of pushed information from a host system 25 to the mobile device 10. One example of such a system will now be described making reference to FIG. 1.

FIG. 1 is an example system diagram showing the redirection of user data items (such as message A or C) from an intermediary computer system (host system) 25 to the user's mobile device 10 via a wireless router 26. The wireless router 26 provides the wireless connectivity functionality as it acts to both make transparent most of the wireless network's 20 complexities, and it also implements features necessary to support pushing data to the mobile device 10. Although not shown, a plurality of mobile devices may access data from the host system 25. In this example, message A in FIG. 1 represents an internal message sent from, e.g. a desktop computer (not shown) within the host system 25, to any number of server computers in the network (e.g. LAN), which may, in general, include a database server, an event server, an E-mail server or a voice-mail server.

Message C in FIG. 1 represents an external message from a sender that is not directly connected to the host system 25, such as the user's mobile device 10, some other user's mobile device (not shown), or any user connected to the public or private network 24 (e.g. the Internet). Message C could be e-mail, voice-mail, event information, database updates, web-page updates or could even represent a command message from the user's mobile device 10 to the host system 25. The host system 25 may comprise, along with the typical communication links, hardware and software associated with a computer network system, one or more wireless mobility agents, a TCP/IP connection, a collection of data stores, (for example a data store for e-mail could be an off-the-shelf mail server like Microsoft Exchange® Server or Lotus Notes® Server), all within and behind a network firewall.

The mobile device 10 may be adapted for communication within wireless network 20 via wireless links, as required by each wireless network 20 being used. As an illustrative example of the operation for a wireless router 26 shown in FIG. 1, consider a data item A, repackaged in outer envelope B (the packaged data item A now referred to as "data item (A)") and sent to the mobile device 10 from an Application Service Provider (ASP) in the host system 25. Within the ASP is a computer program, similar to a wireless mobility agent, running on any computer in the ASP's environment that is sending requested data items from a data store to a mobile device 10. The mobile-destined data item (A) is routed through the network 24, and through the wireless router's 26 firewall protecting the wireless router 26 (not shown).

Although the above describes the host system 25 as being used within a networked environment, this is just one embodiment of one type of host service that offers push-based messages for a handheld wireless device that is capable of notifying and presenting the data to the user in real-time at the mobile device when data arrives at the host system.

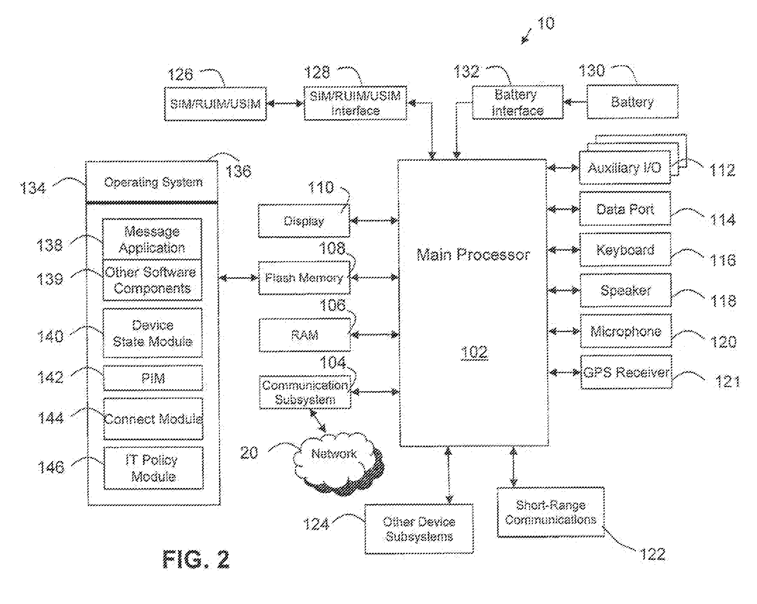

By offering a wireless router 26 (sometimes referred to as a "relay", "message server", "data redirector", etc.), there are a number of major advantages to both the host system 25 and the wireless network 20. The host system 25 in general runs a host service that is considered to be any computer program that is running on one or more computer systems. The host service is said to be running on a host system 25, and one host system 25 can support any number of host services. A host service may or may not be aware of the fact that information is being channelled to mobile devices 10. For example an e-mail or message program 138 (see FIG. 2) might be receiving and processing e-mail while an associated program (e.g. an e-mail wireless mobility agent) is also monitoring the mailbox for the user and forwarding or pushing the same e-mail to a wireless device 10. A host service might also be modified to prepared and exchange information with mobile devices 10 via the wireless router 26, like customer relationship management software. In a third example, there might be a common access to a range of host services. For example a mobility agent might offer a Wireless Access Protocol (WAP) connection to several databases.

Although the system is exemplified as operating in a multi-way communications mode, certain aspects of the system could be used in a "one and one-half" or acknowledgment paging environment, or even with a one-way paging system. In such limited data messaging environments, the wireless router 26 still could abstract the mobile device 10 and wireless network 20, offer push services to standard web-based server systems and allow a host service in a host system 25 to reach the mobile device 10 in many countries.

The host system 25 shown herein can have many methods when establishing a communication link to the wireless router 26. For one skilled in the art of data communications the host system 25 could use connection protocols like TCP/IP, X.25, Frame Relay, ISDN, ATM or many other protocols to establish a point-to-point connection. Over this connection there are several tunnelling methods available to package and send the data, some of these include: HTTP/HTML, HTTP/XML, HTTP/Proprietary, FTP, SMTP or some other proprietary data exchange protocol. The type of host systems 25 that might employ the wireless router 26 to perform push could include: field service applications, email services, stock quote services, banking services, stock trading services, field sales applications, advertising messages and many others. This wireless network 20 abstraction is made possible by the wireless router 26, which implements this routing and push functionality. The type of user-selected data items being exchanged by the host could include: E-mail messages, events, meeting notifications, address entries, journal entries, personal alerts, alarms, warnings, stock quotes, news bulletins, bank account transactions, field service updates, stock trades, heart-monitoring information, vending machine stock levels, meter reading data, GPS data, etc., but could, alternatively, include any other type of message that is transmitted to the host system 25, or that the host system 25 acquires through the use of intelligent agents, such as data that is received after the host system 25 initiates a search of a database or a website or a bulletin board.

The wireless router 26 provides a range of services to make creating a push-based host service possible. These networks may comprise: (1) the Code Division Multiple Access (CDMA) network, (2) the Groupe Special Mobile or the Global System for Mobile Communications (GSM) and the General Packet Radio Service (GPRS), and (3) the existing and upcoming third-generation (3G) and fourth generation (4G) networks like EDGE, UMTS and HSDPA, LTE, Wi-Max etc. Some older examples of data-centric networks include, but are not limited to: (1) the Mobitex Radio Network ("Mobitex") and (2) the DataTAC Radio Network ("DataTAC").

To be effective in providing push services for host systems 25, the wireless router 26 may implement a set of defined functions. It can be appreciated that one could select many different hardware configurations for the wireless router 26, however, many of the same or similar set of features would likely be present in the different configurations. The wireless router 26 may offer any one or more of the following features for host services: 1) An addressing method so that mobile device 10 traffic can be addressed to a host system 25 without the need for the wireless network 20 to assign an identity to each host system 25; 2) An efficient and authenticated method for the host system 25 to initiate a communication connection to the wireless router 26 for the purposes of opening a communication tunnel to the one or more mobile devices 10 that the host system 25 wishes to communicate with; 3) A reliable method for exchanging data between the host system 25 and the mobile device 10, in a manner consistent with the abilities of the wireless network 20; 4) Providing feedback to the host system 25 when data is delivered, which allows the host system to clean up any wireless delivery queues if necessary, or inform the original sender (user or program) that the data has been delivered to the mobile device 10; 5) Implementation of a wireless network 20 initiated push of services or data to a mobile device 10, from a wireless router 26; and 6) Connect to a wide range of wireless networks 20 and provide a way of tracking the user's location so that a follow you anywhere' solution can be provided.

An example configuration for the mobile device 10 is illustrated in FIGS. 2-3. Referring first to FIG. 2, shown therein is a block diagram of an example embodiment of a mobile device 10. The mobile device 10 comprises a number of components such as a main processor 102 that controls the overall operation of the mobile device 10. Communication functions, including data and voice communications, are performed through a communication subsystem 104. The communication subsystem 104 receives messages from and sends messages to a wireless network 20. In this example embodiment of the mobile device 10, the communication subsystem 104 is configured in accordance with the GSM and GPRS standards, which are used worldwide. Other communication configurations that are equally applicable are the 3G and 4G networks discussed above. New standards are still being defined, but it is believed that they will have similarities to the network behaviour described herein, and it will also be understood by persons skilled in the art that the embodiments described herein are intended to use any other suitable standards that are developed in the future. The wireless link connecting the communication subsystem 104 with the wireless network 20 represents one or more different Radio Frequency (RF) channels, operating according to defined protocols specified for GSM/GPRS communications.

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, a GPS receiver 121, short-range communications 122, and other device subsystems 124. As will be discussed below, the short-range communications 122 can implement any suitable or desirable device-to-device or peer-to-peer communications protocol capable of communicating at a relatively short range, e.g. directly from one device to another. Examples include Bluetooth®, ad-hoc WiFi, infrared, or any "long-range" protocol re-configured to utilize available short-range components. It will therefore be appreciated that short-range communications 122 may represent any hardware, software or combination of both that enable a communication protocol to be implemented between devices or entities in a short range scenario, such protocol being standard or proprietary.

Some of the subsystems of the mobile device 10 perform communication-related functions, whereas other subsystems may provide "resident" or on-device functions. By way of example, the display 110 and the keyboard 116 may be used for both communication-related functions, such as entering a text message for transmission over the network 20, and device-resident functions such as a calculator or task list.

The mobile device 10 can send and receive communication signals over the wireless network 20 after required network registration or activation procedures have been completed. Network access is associated with a subscriber or user of the mobile device 10. To identify a subscriber, the mobile device 10 may use a subscriber module component or "smart card" 126, such as a Subscriber Identity Module (SIM), a Removable User Identity Module (RUIM) and a Universal Subscriber Identity Module (USIM). In the example shown, a SIM/RUIM/USIM 126 is to be inserted into a SIM/RUIM/USIM interface 128 in order to communicate with a network. Without the component 126, the mobile device 10 is not fully operational for communication with the wireless network 20. Once the SIM/RUIM/USIM 126 is inserted into the SIM/RUIM/USIM interface 128, it is coupled to the main processor 102.

The mobile device 10 is typically a battery-powered device and in this example includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile device 10. Although current technology makes use of a battery, future technologies such as micro fuel cells may provide the power to the mobile device 10.

The mobile device 10 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, may be installed on the mobile device 10 during its manufacture. Software applications may include a message application 138, a device state module 140, a Personal Information Manager (PIM) 142, a connect module 144 and an IT policy module 146. A message application 138 can be any suitable software program that allows a user of the mobile device 10 to send and receive electronic messages, wherein messages are typically stored in the flash memory 108 of the mobile device 10. A device state module 140 provides persistence, i.e. the device state module 140 ensures that important device data is stored in persistent memory, such as the flash memory 108, so that the data is not lost when the mobile device 10 is turned off or loses power. A PIM 142 includes functionality for organizing and controlling data items of interest to the user, such as, but not limited to, e-mail, text messages, instant messages, contacts, events, and voice mails, and may interact with the wireless network 20. A connect module 144 implements the communication protocols that are required for the mobile device 10 to communicate with the wireless infrastructure and any host system 25, such as an enterprise system, that the mobile device 10 is authorized to interface with. An IT policy module 146 receives IT policy data that encodes the IT policy, and may be responsible for organizing and securing rules such as the "Set Maximum Password Attempts" IT policy.

Other types of software applications or components 139 can also be installed on the mobile device 10. These software applications 139 can be pre-installed applications (i.e. other than message application 138) or third party applications, which are added after the manufacture of the mobile device 10. Examples of third party applications include games, calculators, utilities, etc. The additional applications 139 can be loaded onto the mobile device 10 through at least one of the wireless network 20, the auxiliary I/O subsystem 112, the data port 114, the short-range communications subsystem 122, or any other suitable device subsystem 124.

The data port 114 can be any suitable port that enables data communication between the mobile device 10 and another computing device. The data port 114 can be a serial or a parallel port. In some instances, the data port 114 can be a USB port that includes data lines for data transfer and a supply line that can provide a charging current to charge the battery 130 of the mobile device 10.

For voice communications, received signals are output to the speaker 118, and signals for transmission are generated by the microphone 120. Although voice or audio signal output is accomplished primarily through the speaker 118, the display 110 can also be used to provide additional information such as the identity of a calling party, duration of a voice call, or other voice call related information.

For composing data items, such as e-mail messages, for example, a user or subscriber could use a touch-sensitive overlay (not shown) on the display 110 that is part of a touch screen display (not shown), in addition to possibly the auxiliary I/O subsystem 112. The auxiliary I/O subsystem 112 may include devices such as: a mouse, track ball, infrared fingerprint detector, or a roller wheel with dynamic button pressing capability. A composed item may be transmitted over the wireless network 20 through the communication subsystem 104.

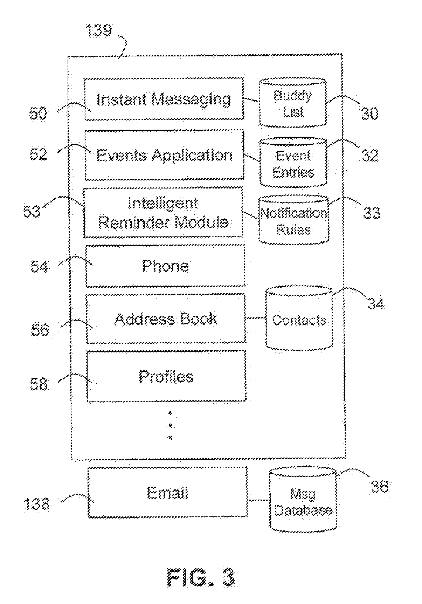

FIG. 3 shows an example of the other software applications and components 139 that may be stored on and used with the mobile device 10. Only examples are shown in FIG. 3 and such examples are not to be considered exhaustive. In this example, an instant messaging application 50, events application 52, an intelligent reminder module 53, phone application 54, address book 56 and a profiles application 58 are shown to illustrate the various features that may be provided by the mobile device 10. It may be noted that the intelligent reminder module 53 is shown as a separate component for illustrative purposes only and may instead be part of or otherwise a subset of the events application 52. Also shown in FIG. 3 is the message application 138, which in the following will be referred to as an email application 138 for clarity and stores or otherwise has access to a message database 36 for storing incoming and outgoing messages as well as those stored in various folders. It will be appreciated that the various applications may operate independently or may utilize features of other applications. For example, the phone application 54 and email application 138 may use the address book 56 for contact details obtained from a list of contacts 34.

The instant messaging application 50 is an instant messaging service that may hosted and provided by the host system 25, e.g. using a messaging server at the wireless router 26 or may be associated with a 3^{rd} party instant messaging service (not shown). The instant messaging application 50 comprises or otherwise has access to contact information often referred to as a "buddy" list 30. The events application 52 comprises or otherwise has access to a portion of memory, database or other data storage device storing event entries 32 which may include any data or information associated with a particular date and time in the events application 52 and may be displayed in a graphical user interface (GUI) therefor.

The intelligent reminder module 53 comprises or otherwise has access to a set of notification rules 33, which may be stored in memory such as a database. The notification rules 33 in the examples described herein may generally refer to any data or information that is used or referred to by the intelligent reminder module 53 in performing its operations and may be updatable, e.g. through user profiles or preferences, user input, IT policies, external commands (i.e. from other devices), etc.

It will be appreciated that any module or component exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 10, wireless router 26, host system 25, etc., or accessible or connectable thereto. Any application or module herein described may be implemented using computer readable/executable instructions that may be stored or otherwise held by such computer readable media.

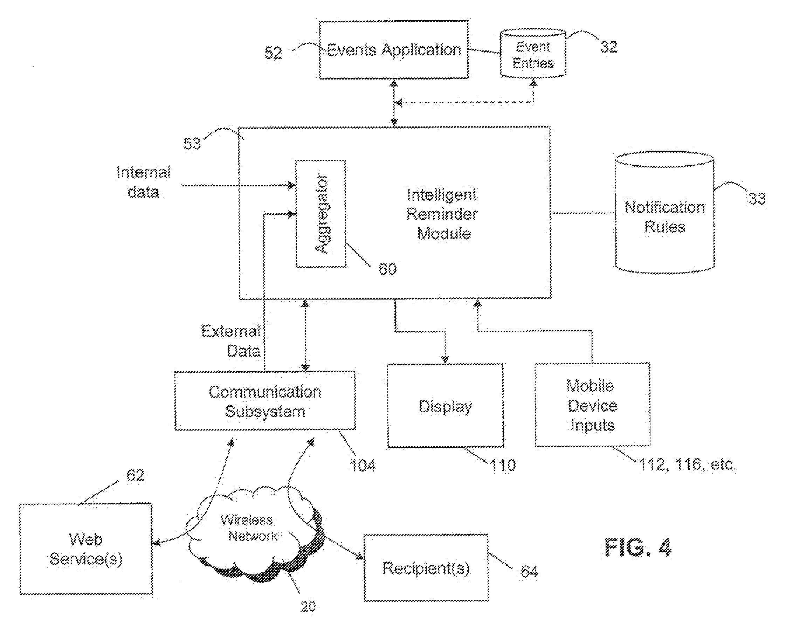

Turning now to FIG. 4, further detail of the intelligent reminder module 53 and an example configuration is shown. The intelligent reminder module 53 in this example comprises or otherwise utilizes an aggregator 60 to gather or "aggregate" both internal and external data where available. The aggregator 60 may be a separate sub-application or module or may in general represent any computer executable instructions and data that can obtain such data and perform an aggregation of the data to obtain an adjusted or suggested time at which to remind the user, according to a predefined routine, algorithm, set of criteria, mathematical relationship, etc. From this aggregation, the intelligent reminder module 53 can compare the suggested time with details related to the event, by obtaining information from the event entries 32. As shown in FIG. 4, the intelligent reminder module 53 may obtain such information through the events application 52 or may be configured to access the event entries 32 directly if the application permits.

The intelligent reminder module 53 may perform the above-noted comparison and reference the notification rules 33 to determine an appropriate remediation process to be initiated. The remediation process can be as simple as adjusting the reminder time and displaying a reminder at an earlier time (or warning of lateness if applicable) or may initiate a process wherein the event is rescheduled, an alternate or delegate is notified and arranged, or the event is cancelled (both locally and for any attendees if applicable). The external data may be obtained from one or more external web services 62 via the wireless network 20 and the communication subsystem 104 as shown. The web services 62 may be polled periodically or data may be uploaded to the mobile device 10 or downloaded from the web service 62 at predetermined times or requested in relation to the reminder algorithm. The web services 62 may be publicly available sources, e.g. available via a web page, or may be dedicated or custom services, e.g. provided in conjunction with the wireless router 26 or host system 25. The intelligence obtained from the external and internal data, and the resulting proposed reminder time (or indication of possible lateness) can be used to notify both the user of the mobile device 10 on which the intelligent reminder module 53 resides, as well as other recipients 64, e.g. other mobile devices 10. For displaying messages and/or reminders on the mobile device 10, the intelligent reminder module 53 may utilize the display 110 and receive inputs from the mobile device inputs such as the auxiliary I/O 112, keyboard 116, etc. to obtain instructions for performing further operations pertaining to the event.

In order to intelligently control event reminder notifications, one or more event entries 32 is required. A event entry 32 may be entered in response to a meeting or other event request (from a meeting organizer) or may be entered locally by the user, e.g. into a calendar or organizer application. In the following examples, an event entry 32 is generated in the events application 52 to enable settings associated with the intelligent reminder module 53 and thus the notification rules 33 to be specified.

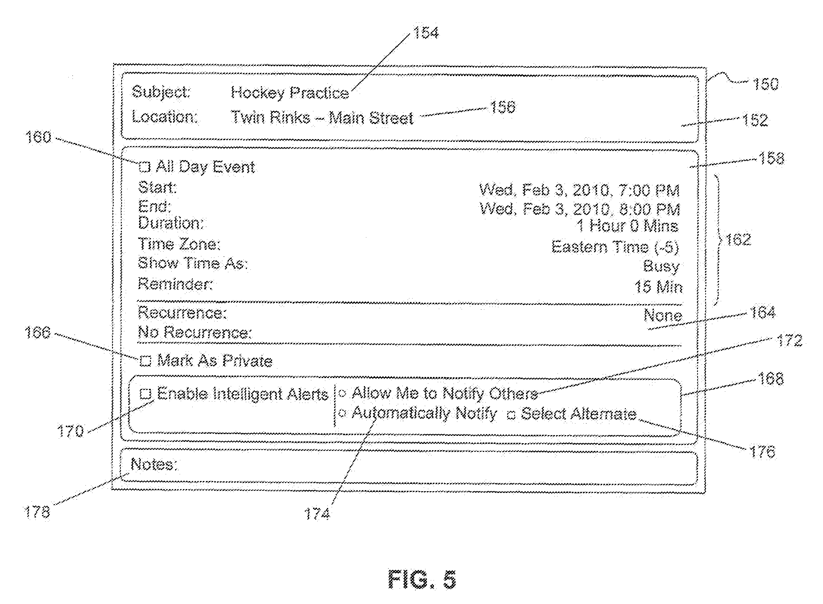

The events application 52 may be initiated or otherwise accessed or launched by, for example, selecting a corresponding icon (not shown) displayed on the mobile device 10 as is well known in the art. Within a typical events application 52, new events, also known as appointments can be entered into a user's organizer or event related application in various ways. For example, the user may select a block of time within a day, week or month view and begin entering text associated with the event or appointment to create a new entry. Alternatively, as shown in FIG. 5, a user interface (UI) providing a new entry screen 150 can be used to specify details and features of the event or appointment. Such a new entry screen 150 can be accessed through a menu (not shown) or other appropriate input mechanism. For simplicity, any event or appointment or other block of time associated with an occurrence in the events application 52 will be referred to as an "event".

In the example shown in FIG. 5, the new entry screen 150 comprises a heading portion 150, a details portion 158, and a notes portion 178. The heading portion 150 enables a subject 154 and a location 156 for the event to be specified, wherein typically the subject 154 is used to identify the event in the calendar display in a short-hand manner. The notes portion 178 enables additional information to be added to the event entry, for example agenda items or other information pertinent to the corresponding event.

The details portion 158 provides the ability to specify various parameters 162 for the event. In the example shown, the parameters include a start time, an end time, a duration, a time zone, how to display the user's availability during that time (Show Time As), and when to provide a reminder (if any). It can be appreciated that such parameters may be interrelated and a setting in one or more of the parameters can thus cause another parameter to change. For example, the end time with respect to the start time should automatically adjust the duration accordingly. Rather than specify specific times for the appointment, an All Day Event option 160 can also be provided to enable the event to span the entire day in the organizer. An event can also be a recurring event and thus recurrence settings 164 can also be specified in this example. In FIG. 5, there is no recurrence of the event. However, although not shown in FIG. 5, the event can be set to be a recurring event, e.g. daily, weekly, monthly, etc. which then enables the user to enter appropriate settings for the recurring event, such as the end date for the event (or never), which day (when weekly or monthly), etc. as is well known in the art.

In order to control the event's visibility to other attendees in a shared events application 52, a Mark As Private option 166 can also be provided. In this way, by selecting the Mark As Private option 166, the user can control read permissions across a group sharing their events applications 52. For example, if a user that normally shares their events application 52 has a private meeting, e.g. a job interview that they do not wish to divulge, they can use the Mark as Private option 166 to ensure that the other members of the group know that they are busy but do not know the details.

To enable the user to have some control over the intelligent reminder module 53 and the notification rules 33, the details portion 158 may also include an intelligent alerts portion 168 as shown in FIG. 5. The intelligent alerts portion 168 in this example includes an Enable Intelligent Alerts option 170 which allows the user to select or deselect use of the intelligent reminder module 53. When the Enable Intelligent Alerts option 170 is selected, the user is able to select between an Allow Me to Notify Others option 172 and an Automatically Notify option 174. When the Automatically Notify option 174 is selected, a Select Alternate option 176 can be selected. The Allow Me to Notify Others option 172 provides the user with control over how to initiate remediation when lateness or potential lateness for the event is determined. In this way, upon notifying the user that they are potentially or already likely late for the event, an option to notify others can be initiated, e.g. by pre-populating an email message. The Automatically Notify option 174 enables the user to rely on the mobile device 10 itself or a third party service to initiate and arrange notifications for other attendees, potential replacements or delegates, or both. The Select Alternate 176 can also be used to more finely specify the nature of the automatic remediation as will be shown by way of example below. It can be appreciated that the intelligent alert options 172-176 are provided for illustrative purposes only and various combinations of these features can be provided using any suitable user interface, IT policy, predefined notification rule 33, etc.

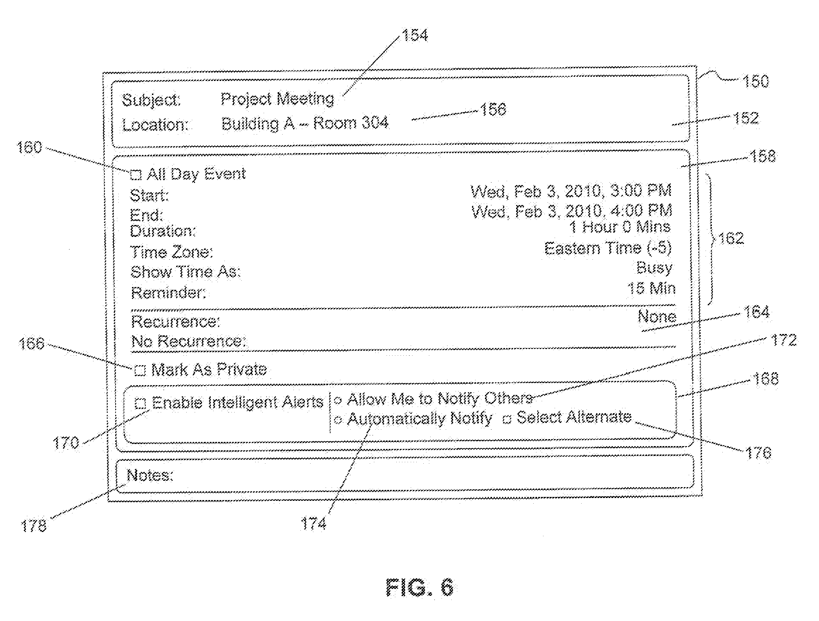

The example shown in FIG. 5 relates to a scheduled hockey practice at the Twin Rinks on Main Street to illustrate a personal event that may or may not be shared with others or have other "attendees". FIG. 6 illustrates a similar new entry screen 150 but for a different event, namely a Project Meeting in Building A - Room 304. The event in FIG. 6 has been shown to illustrate an example event that likely includes one or more other attendees and thus may include information that suggests at least one recipient should be notified if remediation is initiated. Therefore, it can be appreciated that event types can be considered and notification rules 33 associated with different event types created to accommodate such different event types. For example, if the user is going to be late for the hockey practice, they may wish to specify a possible alternate or may be able to pre-designate an alternate. In this case, the Select Alternate option 176 can be configured to trigger the entry of further details (not shown) to allow the user to further specify what is to be done if remediation is warranted. For the example shown in FIG. 6, a meeting type event that includes other attendees can be relied on by the intelligent reminder module 53 to notify the others and, if applicable, suggest rescheduling or proposing and negotiating a delegate or replacement for attending the meeting. It can be appreciated that event type information can be specified by the user in the new entry screen 150 (not shown), can be specified in the notification rules 33 (e.g. through user preferences), or can be intelligently determined (e.g. based on the presence or absence of other attendees). Also, it can be appreciated that the selection of a potential candidate to assist in the remediation (such as an alternate or delegate) can be based on particular criteria. For example, information such as whether or not the candidate has a car (to get to the event), have the appropriate qualifications or background to attend the event (e.g. for delegates to meetings etc.), is the candidate in the same group (e.g. work group, peer group, etc.).

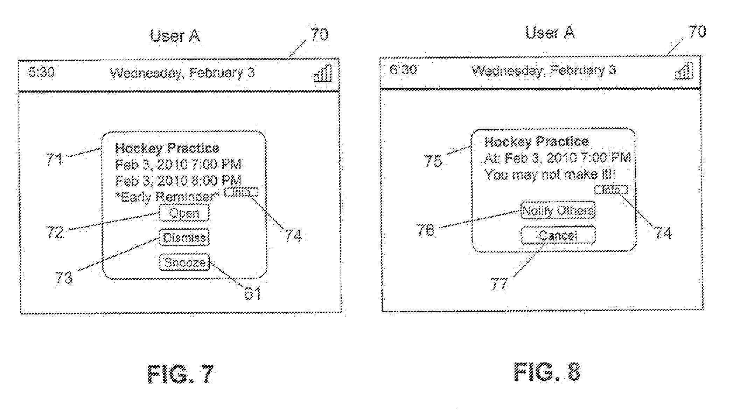

Various notification messages will now be described by way of example, making reference to FIGS. 7 to 16.

FIG. 7 illustrates an example mobile device display 70 showing an event reminder notification 71. The reminder notification 71 in this example is similar to a normal event reminder that would be displayed according to the event details 162, however, indicates that it is an early reminder. This can be done to draw attention to the user that certain circumstances have indicated that an earlier reminder was needed. An Info button 74 can be provided as shown to enable the user to obtain further details regarding the adjusted reminder time. For example, by selecting the Info button 74 an additional message or window (not shown) can be displayed indicating an unforeseen circumstance or other information that was used by the aggregator 60. The reminder notification 71 in this example provides an Open button 72 to open the calendar entry 32, and a Dismiss button 73 to enable the user to dismiss the reminder as is well know in the art. The reminder notification 71 also includes a Snooze button 61, which can be provided to enable the user to delay or postpone the reminder. For example, if they receive an early reminder but have since changed locations and would be early for the event, they could postpone the reminder by selecting the Snooze button 61 to initiate a reminder closer to the actual event start time.

FIG. 8 illustrates a lateness notification 75 which may be displayed to the user (User A) on the mobile device display 70 when determining that the time it would take to reach the event location is longer than the length of time between the current time and the event start time. In this example, the lateness notification 75 also includes the Info button 74 for determining further details. The lateness notification 75 also includes a Notify Others button 76 to enable User A to notify another entity in association with the lateness or potential lateness with respect to the event start time. The lateness notification 75 also includes a Cancel button 77 to enable User A to ignore the lateness notification 75, e.g. if they were able to remedy the situation offline or the event no longer requires their attendance.

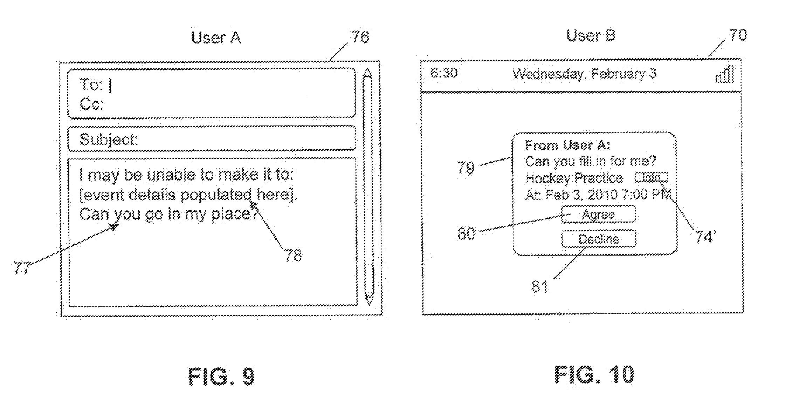

In one embodiment, by selecting the Notify Others button 76 shown in FIG. 8, the mobile device 10 may be configured to initiate the composition of a new message, e.g. a pre-populated message 76 as shown in FIG. 9. In FIG. 9 it can be seen that the message 76 may include predetermined text, including an event details portion 78 that is determined and inserted into the message 76. It can be appreciated that a blank message (not shown) may instead be provided, and subject and address information for the recipient(s) can be determined and populated automatically if the application permits. By initiating the new message 76 as shown in FIG. 9, User A can utilize the capabilities of the mobile device 10 to send an email to a potential alternate (e.g. another family member or friend). It can also be appreciated that another communication medium can instead be initiated, such as a phone application, instant messaging (IM) application, short message service (SMS), etc. In general therefore, the intelligent reminder module 53 can be configured to enable a communication process to be initiated upon determining that one or more recipients should be notified (e.g. through notification rules 33, user input, etc.).

FIG. 10 illustrates a request notification 79 displayed by a recipient, in this example User B. It can be appreciated that the request notification 79 is shown by way of example only and an email or other message may instead be used. In this example, however, the request notification 79 is shown to illustrate that the recipient's events application 52 can be configured to process messages related to another user's reminders and display notifications that resemble those that would otherwise be displayed for User B's calendar entries 32. The text provided in the request notification 79 can be predetermined or entered by User A. The request notification 79 includes an Info button 74' which, similar to Info button 74, can be selected in order to obtain additional information pertaining to the lateness of the sender. An Agree button 80 is provided to enable User B to accept the request to be an alternate for the specified event, and a Decline button 81 is provided to enable User B to decline the request.

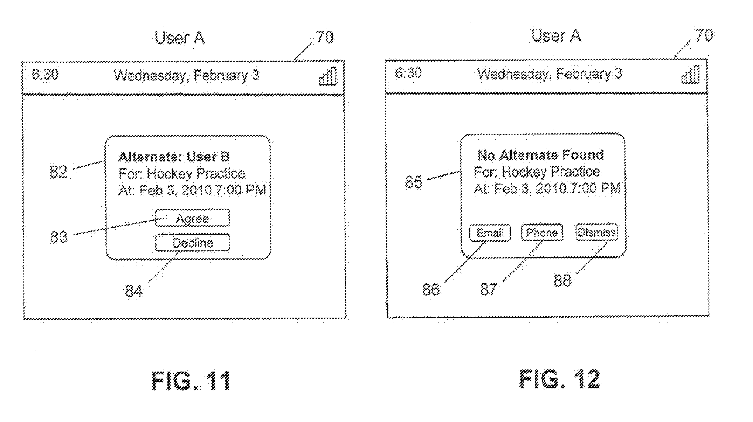

FIG. 11 illustrates an acceptance notification 82 that is displayed for User A to indicate that User B has accepted the request to attend to the event specified. As will be explained below, in some embodiments, a third party service or automatic routine may be used to notify potential alternates. Therefore, in such cases, an Agree button 83 and Decline button 84 can be provided to enable User A to confirm or reject the appointment of User B as an alternate for the specified event. It can be appreciated that in other embodiments, a simple notification of the alternate can be provided without any option to confirm or deny.

FIG. 12 illustrates a denial notification 85, which indicates in this example that no alternate can be found for the specified event. If the alternate is requested manually by User A, the message may instead indicate that User B did not accept. The message shown in the denial notification 85 may be used when an automatic procedure is used, in particular where multiple possible alternates (e.g. other attendees) are known to the intelligent reminder module 53. To enable User A to continue attempting to remedy the potential lateness, an Email option 86, Phone option 87, and Dismiss option 88 are shown. In this way, by selecting the Email option 86, an email message can be initiated (e.g. as shown in FIG. 9) or by selecting the Phone option 87, the phone application 54 may be loaded (not shown). The Dismiss option 88 enables User A to end the remediation process, e.g. to begin making other arrangements offline or if the urgency related to the event no longer exists. It can be appreciated that the Email option 86 and Phone option 87 are shown purely for illustrative purposes and different, more, or fewer options can be used, e.g. SMS, IM, etc.

As discussed above, for certain event types, e.g. a meeting with other attendees, User A may be provided with the ability to request a rescheduling of the event. It can be appreciated that such rescheduling options can also be performed for event entries 32 that reside only on one mobile device 10. For example, if the event in question is a haircut appointment and User A is able to arrange for another time, the events application 52 can be automatically updated to "reschedule" the new time for the haircut.

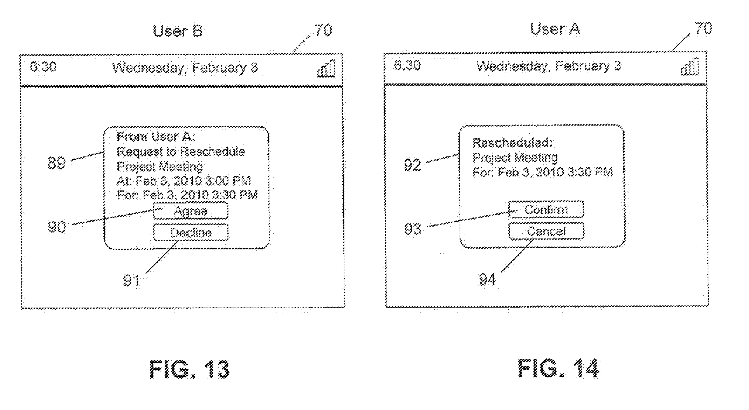

To continue with the example concerning the Project Meeting shown in FIG. 6, one or more other attendees may receive a reschedule request notification 89 as shown in FIG. 13. The reschedule request notification 89 can be sent or otherwise triggered or initiated on User B's mobile device 10 either in response to a request generated by User A or done automatically through the intelligent reminder module 53 (or a service on its behalf). The reschedule request notification 89 provides a suggested time to reschedule the specified event (e.g. Project Meeting) and enables User B to agree with the request by selecting an Agree button 90 or to decline the request by selecting a Decline button 91.

If User B selects the Agree button 90, a reschedule confirmation notification 92 may be displayed on User A's mobile device 10 as shown in FIG. 14. In this example, the reschedule confirmation notification 92 enables User A to confirm the rescheduled time by selecting a Confirm button 93 or to cancel or otherwise abort the rescheduling by selecting a Cancel button 94. It may be noted that the Confirm button 93 can be particularly advantageous in embodiments wherein User B is capable of declining the suggested rescheduled time but at the same time propose an alternative rescheduled time. For example, in the example shown in FIG. 13, if User B has another meeting at 4:00 PM that would therefore overlap with the Project Meeting, User B could instead propose to move the Project Meeting to 5:00 PM or a different day. This can be done by either providing a third option for proposing a new time or enabling such a selection to be made after selecting the Decline button 91. Accordingly, if a new time is instead suggested, User A can confirm this new time, cancel, decline, or even propose yet another time. Therefore, it can be appreciated that the example notifications shown in FIGS. 7 to 16 are for illustrative purposes only and various modification thereof are applicable to the principles discussed herein.

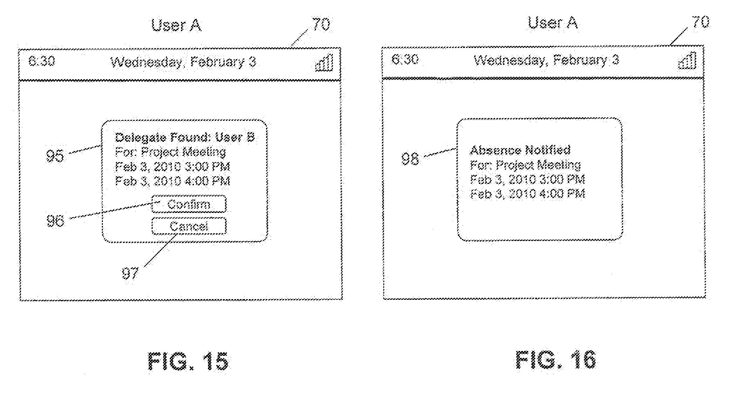

FIG. 15 illustrates a delegate confirmation notification 95, which may be displayed on User A's mobile device 10 in embodiments wherein a delegate is used instead of rescheduling. For example, User A may know that User B could also attend the meeting in their place and thus could initiate a remediation process to notify and request User B to be a delegate, in a manner similar to finding an alternate for the hockey practice as discussed above. The delegate can be assigned in the event entry 32, can be designated through the notification rules 33 or can be entered by User A upon receiving a message such as that in FIG. 8. A Confirm button 96 and a Cancel button 97 can be provided in the delegate confirmation notification 95 to enable User A to confirm or decline this delegation. The ability to confirm or decline may again be particularly advantageous when an automatic process or third party service is used to arrange the delegate.

FIG. 16 illustrates an absence notification 98, which can be used in embodiments wherein an alternate, rescheduling, delegate or other remediation could not be arranged or in embodiments wherein simply notifying other attendees is desired.

It can therefore be seen that various notification mechanisms and options therewithin can be used to notify both the user associated with the mobile device 10 on which the intelligent reminder module 53 resides, and others associated with the event. It can also be appreciated that using such notifications can enable the intelligent reminder module 53 and/or a third party service to negotiate alternates/delegates, reschedule meetings, and notify others of cancelled events. The notification rules 33 can be used to define which notification mechanisms are used for different event types and for different situations, e.g. when the user "may" be late versus is already late.

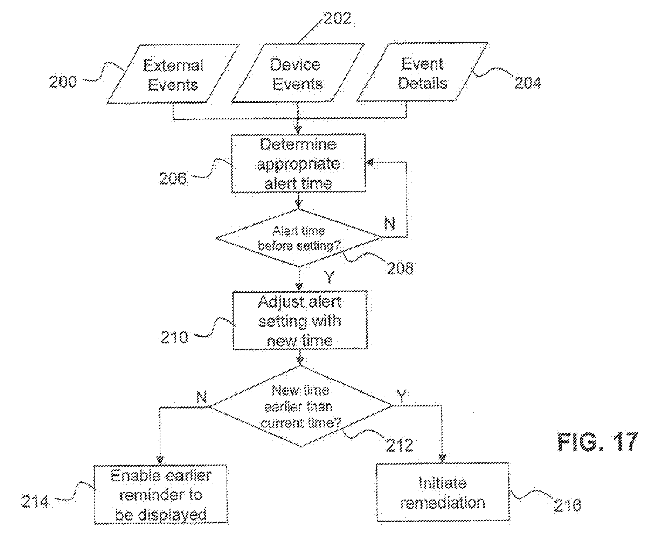

Turning now to FIG. 17, an example set of computer executable instructions is provided for controlling event reminders using the intelligent reminder module 53. The intelligent reminder module 53 obtains external data 200, device data 202, and event details 204, e.g. using the aggregator 60. The external data 200 can be obtained through any appropriate channel such as one or more web services 62 as illustrated in FIG. 4. For example, one web service 62 may be used to obtain traffic data while another web service 62 is used to obtain weather information. It can be appreciated that a single web service 62 can also be used to obtain multiple sources of data and information, e.g. a custom web service 62 that is associated with the mobile device's service provider or other related entity. The device data 202 may represent any data or information that is obtained from the device itself. For example, the GPS receiver 121 can be utilized to determine location information.

The device data 202 can be any data or information provided by or available from the mobile device 10 that can be used in determining whether or not to adjust the alert time. For example, a GPS location for the mobile device 10 obtained using the GPS receiver 121 can be used to determine the distance between where the mobile device 10 currently is and where it needs to go, in other words how far the mobile device 10 is from the location associated with the event. The event details 204 can be any relevant information pertaining to the event, such as the location at which the event will be held, the time at which the event is to be held, the duration of the event, other attendees associated with the event, etc.

The external events 200, device events 202, and event details 204 may then be used to determine an appropriate alert time at 206. For example, an aggregation routine or algorithm can be used by the aggregator 60 to determine when the reminder should be displayed on the mobile device 10 and/or if an alternate or delegate should be arranged, others should be notified, etc. as shown by way of example above. An example aggregation algorithm is as follows:

Location data (device location, destination location, estimated time between) + Traffic data (possible delays along the route between locations) + Weather data (possible delays for rain, wind, snow, etc.) + Appointment type (e.g. time associated with clearing security at airport) = Adjusted Reminder Time.

In this example, the Location data, Traffic data, Weather data, and Appointment type each have a duration of time associated with it, such that the aggregate of these durations of time equal a total duration of time that is representative of approximately how much advance notice the user may need to get from their current location to the event. That duration can be used to then determine an appropriate time prior to the event to provide a reminder on the display of the mobile device 10. It can be appreciated that the algorithm shown above is for illustrative purposes only and that more or less sophisticated calculations can be used to make such an estimation. Also, it can be appreciated that the algorithm and the operations shown in FIG. 17 in general can be performed periodically and the adjusted reminder time recalculated dynamically to accommodate changing locations and unforeseen external events.

At 208, the intelligent reminder module 53 then determines if the appropriate alert time determined in 206 falls on a time which is prior to the reminder set for the event, e.g. as determined from the event details 204. For example, if the appropriate alert time is calculated to be 1 hour but a 1.5 hour reminder time is set, there is no need to adjust the alert time as the earlier time should supersede a later one. If the alert time determined in 206 does fall on a time that is prior to the current reminder setting, the alert setting can be adjusted at 210 with the new time. The intelligent reminder module 53 then determines at 212 if the new time for the reminder is earlier than the current time. If not, then the events application 52 is enabled to simply display the adjusted reminder time at the earlier time at 214. However, if the adjusted reminder time falls prior to the current time, i.e. it would have needed to be provided in the past to give the user enough time to reach the event, a remediation process can be initiated at 216. It can be appreciated that various remediation processes can be implemented at 216 in order to address the possibility that the user would be late or cannot make the event. For example, as will be discussed in greater detail below, alternates or delegates can be appointed, the event time adjusted, etc. and the notifications shown in FIGS. 7 to 16 may be used.

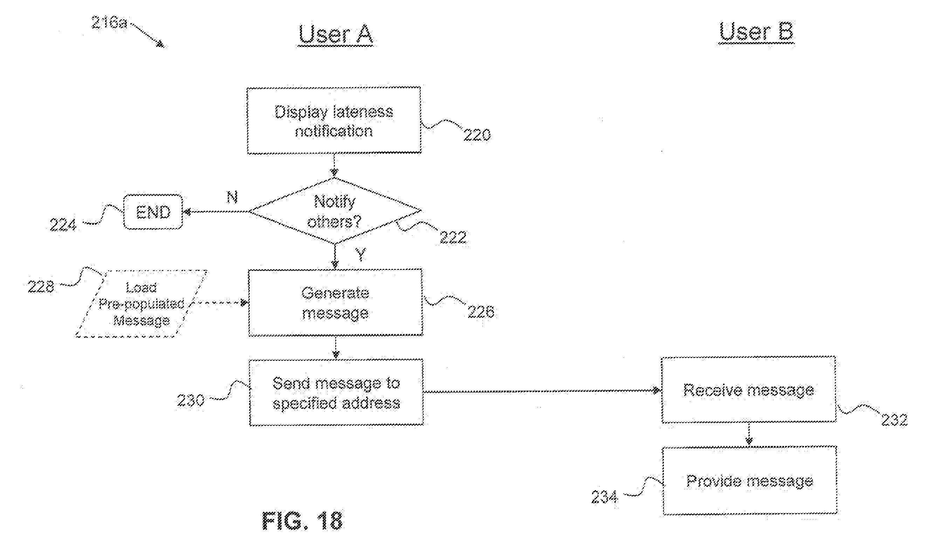

An example set of computer executable instructions for executing an example remediation process 216a is shown in FIG. 18. In this example, User A is notified at 220 that they may be late, for example using a lateness notification 75 such as the one shown in FIG. 8. In this case, the option to notify others or not is provided at 222. If it is determined that User A chooses not to notify others, e.g. by detecting selection of the Cancel button 77 in FIG. 8, the process ends at 224. On the other hand, if it is detected that User A wishes to notify one or more other users, the intelligent reminder module 53 can be configured to enable a message to be generated at 226. In some embodiments, as discussed above, a pre-populated message 76 can be generated in order to expedite this process and, if such a pre-populated message 76 is used, it can be loaded at 228. User A may then modify or create a new message or elect to send the pre-populated message 76 as is. Upon detecting that a new message is to be sent, the intelligent reminder module 53 instructs the processor 102 and, if necessary, the email application 138 (when used) to send the message to a specified one or more addresses at 230. In this example the message is addressed to a mobile device 10 associated with User B. User B then receives the message at 232 and provides the message, e.g. by displaying it, inserting it in an inbox, etc. at 234. It can be seen that by enabling User A to generate a message in response to a lateness notification 75, a remediation process 216a can be undertaken according to the content of the message being sent.

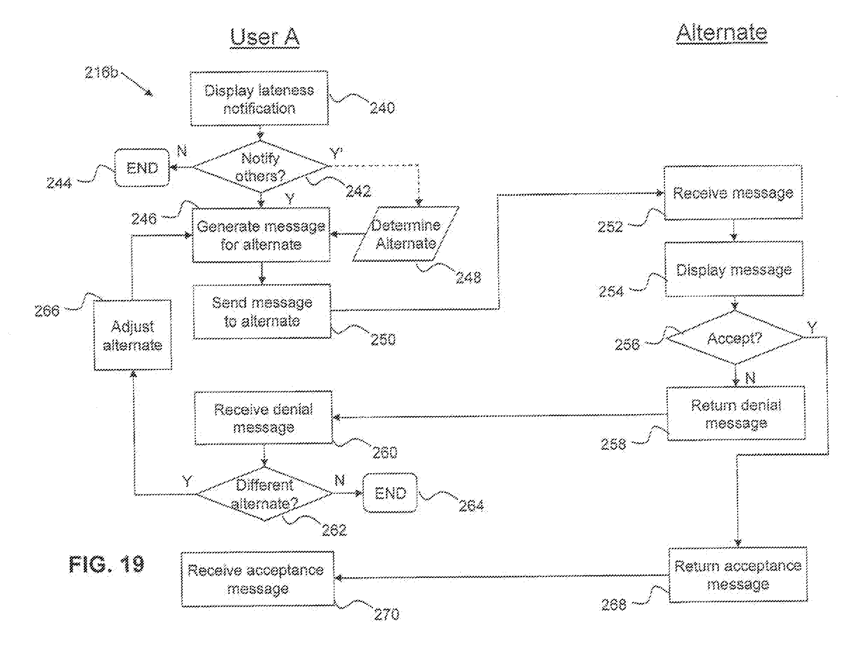

Another remediation process 216b is shown by way of example in FIG. 19. Turning now to FIG. 19, a lateness notification 75 may be displayed at 240, similar to the example process shown in FIG. 18. Also, User A can be given the opportunity, via such a lateness notification 75, to notify others at 242. If it is detected that User A does not wish to notify others, the process ends at 244. On the other hand, if it is detected at 242 that User A does wish to notify others, in this example, a process begins wherein an alternate attendee is determined. If pre-selected alternate or other information is available in this regard (e.g. by accessing the notification rules 33), the intelligent reminder module 53 determines an alternate at 248. Whether the intelligent reminder module 53 can determine the alternate or requires user input, the intelligent reminder module 53 generates a message for the alternate at 246, e.g. by loading a new email message. If the alternate is to be specified by User A, the recipient can be added at this point. The message thus created is then sent to the specified alternate at 250 and received by that alternate at 252. The alternate may then display the message or an associated request 79 such as that shown in FIG. 10 at 254. The computing device associated with the alternate then determines at 256 if the alternate has accepted the request to be an alternate at 256, e.g. by detecting selection of the Agree button 80 in the request 79. If the requested alternate denies the request, e.g. by selecting the Decline button 81, a denial message is generated and returned to User A's mobile device 10 at 258, the denial message being received at 260. The denial message 85 can be displayed to User A upon receipt, e.g. as shown in FIG. 12. However, as shown in FIG. 19, the intelligent reminder module 53 can also be configured to enable User A to choose another alternate at 262. If User A declines to choose another alternate, the process ends at 264. If on the other hand, the intelligent reminder module 53 detects that User A wishes to choose another alternate, the intelligent reminder module 53 can enable User A to adjust the alternate, e.g. by selecting or specifying a different alternate at 266 and the process can be repeated from 246. It can be appreciated that the intelligent reminder module 53 may have access to more than one suggested alternates, e.g. as specified in the notification rules 33 and thus may proceed to adjust the alternates at 266 and repeat the process until all alternates have been exhausted.

Returning to operation 256, if on the other hand, it is detected that the alternate has agreed to the request, e.g. by selecting the Agree button 80 at 256, an acceptance message can be generated and returned to User A's mobile device 10 at 268. The acceptance message 82 can be received by User A's mobile device 10 at 270 and displayed, e.g. as shown in FIG. 11.

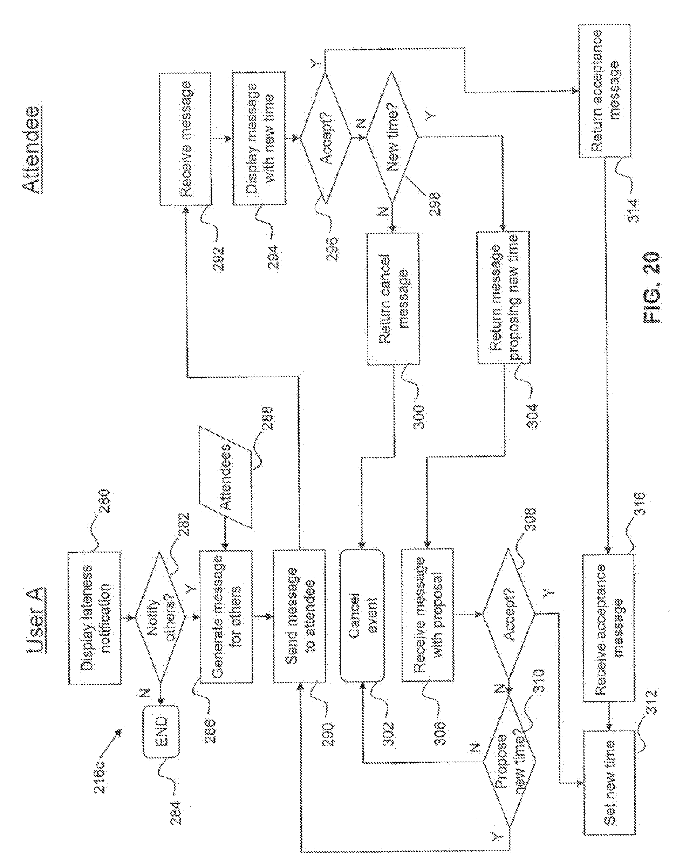

Yet another remediation process 216c is shown by way of example in FIG. 20. Turning now to FIG. 19, a lateness notification 75 may be displayed at 280, similar to the example process shown in FIG. 18. Also, User A can be given the opportunity, via such a lateness notification 75, to notify others at 282. If it is detected that User A does not wish to notify others, the process ends at 284. On the other hand, if it is detected at 282 that User A does wish to notify others, in this example, a process begins wherein other attendees to the event are notified and, if desired, the event rescheduled. At 286, the intelligent reminder module 53 generates a message to be sent to the attendees, which can be done by accessing information pertaining to the attendees at 288. It can be appreciated that in this example, an exchange with only one other attendee is shown for ease of illustration, however, the principles shown in FIG. 20 can be extended to multiple attendees, either in parallel or serially.

The message to be sent to the other attendee is sent to the attendee at 290, which is received by the attendee at 292. In this example, a request to reschedule 89 such as the one shown in FIG. 13 is displayed to the attendee at 294, which proposes a new time for the event. The computing device associated with the attendee then determines at 296 if the attendee has chosen to accept the new time or not. If the computing device determines that the attendee has accepted the new time at 296, an acceptance message 92 such as that shown in FIG. 14 is returned to User A's mobile device at 314, which is received by User A's mobile device 10 at 316 and a new time for the event set at 312. If on the other hand, the attendee does not accept the proposed new time at 296, the computing device then determines if the attendee has proposed an alternative new time at 298. If the attendee has not accepted the proposed time and has not proposed their own time, e.g. if the Decline button 91 is selected and no further suggestion is made, a cancel message can prepared and returned to User A's mobile device 10 at 300, which is received thus cancelling the event for User A at 302. If it is determined that the attendee has proposed an alternative new time at 298, a message proposing a new time can be prepared and sent to User A's mobile device 10 at 304.

A message with a proposed alternative new time (not shown) may then be received by User A's mobile device 10 at 306 and User A may then be given the opportunity to accept, deny or propose yet another time at 308 and 310. For example a message with various options to that effect can be displayed to User A using the intelligent reminder module 53 enabling such selections to be detected. If the new time proposed by the attendee is accepted at 308, the new time may be set at 312. If the new time proposed by the attendee is not accepted at 308, and a new time is not proposed at 310, the event can be cancelled at 302. Finally, if the new time proposed by the attendee is not accepted at 308 but yet another new time is proposed at 310, a new message can be prepared at 290 and the process repeated until the event is cancelled or a new time is negotiated. It can therefore be appreciated that the intelligent reminder module 53 can be configured to enable both notifications and exchanges of requests or proposals between devices in order to complete the remediation process 216.

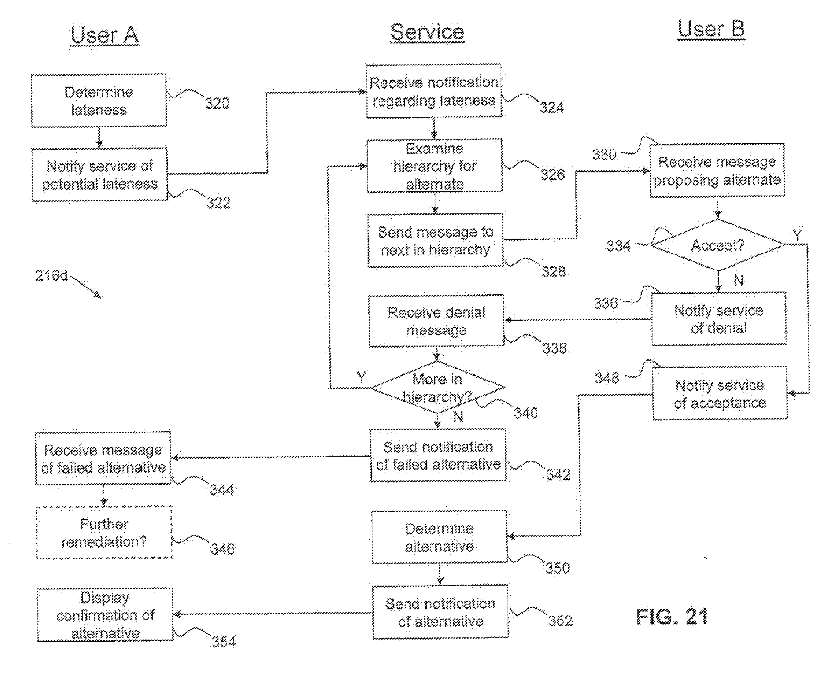

Yet another example remediation process 216d is shown in FIG. 21. In FIG. 21 it may be noted that an intermediary service such as a server process or third party application, remote to the mobile device 10 is used. For example, the host system 25 or wireless router 26 can run the service. At 320, User A's mobile device 10 determines the potential lateness and notifies the service of the potential lateness at 322, which is received at 324. In this example, the service being used stores a hierarchy of potential delegates or alternates for the event. For example, various family members can be specified by User A for filling in for certain event types such as hockey practice for a child or attendance at a family function. In such an example, the hierarchy is examined at 326 to find a potential alternate for User A. If an alternate is found, the service generates and sends a message to the next in the hierarchy at 328, which is received in this example by User B at 330. For example, the request 79 shown in FIG. 10 can be displayed at 330 to User B. The computing device associated with User B then determines at 334 whether or not User B accepts being an alternate. If User B has accepted the proposal to be an alternate at 334, the service is notified by User B's computing device of the acceptance at 348, which enables the service to determine that an alternative attendee or "delegate" has been arranged at 350. A notification of the alternative attendee or delegate may then be provided to User A's mobile device 10 at 352, which may then be displayed to User A at 354, e.g. as shown in FIG. 11 or FIG. 15.

If at 334, the computing device associated with User B determines that User B has denied the proposal to fill in for User A, the service may be notified of the denial at 336, which is received by the service at 338. The service then determines at 340 whether or not there are additional potential alternates. If there are on or more additional alternates, the hierarchy is examined again at 326 and the process repeats. If there are no additional alternates, a notification of a failed alternative is prepared and sent to User A's mobile device at 342. User A's mobile device 10 then receives the message of a failed alternative at 344.

In some embodiments (not shown explicitly), the intelligent reminder module 53 can be configured to perform any one or more of the example remediation processes 216 shown herein and thus the intelligent reminder module 53 can be configured to enable further remediation at 346. For example, if the service is unable to find an alternative using the stored hierarchy, the intelligent reminder module 53 can enable User A to send a customized message to any desired recipient using the process shown in FIG. 18. It can therefore be appreciated that the examples shown in FIGS. 17 to 21 are meant to illustrate various optional routines that may be modified, combined or otherwise adapted to different applications or different event types.

Although the above principles have been described with reference to certain specific embodiments, various modifications thereof will be apparent to those skilled in the art without departing from the scope of the claims appended hereto.

## Claims

1. A method of controlling event reminders in a computing device, the method comprising:
the computing device enabling an event entry to be stored in the computing device, the event entry having a start time associated therewith;
the computing device receiving a designation for the event entry indicative of a reminder time for the event, wherein computing device is configured to display a reminder on a display of the computing device at a predetermined time prior to the start time for the event;
the computing device obtaining data associated with the event and indicating that an earlier reminder time is required;
the computing device using the data associated with the event to automatically generate a new reminder time which is earlier than the reminder time designated for the event; and
the computing device displaying a message on the display associated with the new reminder time.

2. The method according to claim 1, further comprising comparing the new reminder time to a current time and if the current time is later than the new reminder time, initiating a remediation process; and if the current time is prior to the new reminder time, displaying the message on the display at the new reminder time.

3. The method according to claim 2, wherein the remediation process comprises displaying a lateness notification on the computing device and enabling a communication to be initiated with one or more other entities.

4. The method according to claim 3, wherein the communication is any one of an email message, an instant message, a text message, and a telephone call.

5. The method according to claim 3, wherein the remediation process comprises determining an alternate attendee for the event; enabling communication with the alternate to provide a request; and obtaining a response from the alternate regarding the request.

6. The method according to claim 3, wherein the remediation process comprises sending a message to one or more attendees requesting a new start time for the event; and obtaining a response from at least one attendee regarding the request.

7. The method according to claim 2 or claim 4, wherein the remediation process comprises sending a lateness notification to an intermediate service to enable the intermediate service to notify one or more entities associated with the event.

8. The method according to claim 7, wherein the intermediate service is provided with a hierarchy of a plurality of alternates for arranging an alternate for the event.

9. The method according to any one of claims 1 to 8, wherein the data associated with the event is indicative of an increased amount of time to arrive at a location associated with the event.

10. The method according to claim 9, wherein the new reminder time is determined by combining one or more time intervals associated with the data according to a predetermined function.

11. The method according to claim 10, wherein the data associated with the event comprises any one or more of weather data, traffic data, GPS location data, flight information, customs and security wait times, and parking information.

12. A computer readable medium comprising computer executable instructions that when executed by a computing device configure the computing device to perform the method according to any one of claims 1 to 11.

13. A computing device comprising a display, a processor, one or more input devices, computer executable instructions for initiating an events application, and computer executable instructions for configuring the computing device to perform the method according to any one of claims 1 to 11.

## Amended claims

### Amended claims in accordance with Rule 137(2) EPC.

**1.** A method of controlling event reminders in a computing device, the method comprising:
the computing device enabling an event entry to be stored in the computing device, the event entry having a start time associated therewith;
the computing device receiving a designation for the event entry indicative of a reminder time for the event, wherein computing device is configured to display a reminder on a display of the computing device at a predetermined time prior to the start time for the event;
the computing device obtaining data associated with the event, wherein the data associated with the event indicates that an earlier reminder time is required;
the computing device using the data associated with the event to automatically generate a new reminder time which is earlier than the reminder time designated for the event; and
the computing device comparing the new reminder time to a current time (208) and, if the current time is later than the new reminder time (212), initiating a remediation process (216, 216a, 216b, 216c) and
providing a notification to obtain confirmation of an outcome of the remediation process (92).

**2.** The method according to claim 1, wherein if the current time is prior to the new reminder time (212), the method further comprising the computing device displaying a message on the display at the new reminder time (254).

**3.** The method according to claim 2, wherein the remediation process (216) comprises displaying a lateness notification (280) on the computing device and enabling a communication to be initiated with one or more other entities (322).

**4.** The method according to claim 3, wherein the communication is any one of an email message, an instant message, a text message, and a telephone call.

**5.** The method according to claim 3, wherein the remediation process (216) comprises determining an alternate attendee for the event; enabling communication with the alternate to provide a request; and obtaining a response from the alternate regarding the request to include in the notification.

**6.** The method according to claim 3, wherein the remediation process (216) comprises sending a message to one or more attendees requesting a new start time for the event; and obtaining a response from at least one attendee regarding the request to include in the notification.

**7.** The method according to claim 2 or claim 4, wherein the remediation process (216) comprises sending a lateness notification (75) to an intermediate service to enable the intermediate service to notify one or more entities associated with the event.

**8.** The method according to claim 7, wherein the intermediate service is provided with a hierarchy of a plurality of alternates for arranging an alternate for the event (176).

**9.** The method according to any one of claims 1 to 8, wherein the data associated with the event is indicative of an increased amount of time to arrive at a location associated with the event.

**10.** The method according to claim 9, wherein the new reminder time is determined by combining one or more time intervals associated with the data associated with the event according to a predetermined function.

**11.** The method according to claim 10, wherein the data associated with the event comprises any one or more of weather data, traffic data, GPS location data, flight information, customs and security wait times, and parking information.

**12.** A computer readable medium comprising computer executable instructions that when executed by a computing device configure the computing device to perform the method according to any one of claims 1 to 11.

**13.** A computing device comprising a display (110), a processor (102), one or more input devices (112, 114, 116, 118, 120, 121), computer executable instructions for initiating an events application (52), and computer executable instructions for configuring the computing device to perform the method according to any one of claims 1 to 11.
